# EUROPEAN PATENT APPLICATION

(11) **EP 4 676 116 A1**
(43) Date of publication of application: **07.01.2026**
(21) Application number: 24777862.4
(22) Date of filing: 21.03.2024
(51) Int. Cl.: H04W 28/02

(54) **COMMUNICATION METHOD AND COMMUNICATION APPARATUS**

(30) Priority: 27.03.2023 CN 202310354091
(71) Applicant: Huawei Technologies Co., Ltd., Shenzhen, Guangdong 518129 (CN)
(72) Inventor: ZHOU, Kai, Shenzhen, Guangdong 518129 (CN)
(74) Representative: Gill Jennings & Every LLP
(86) International application number: PCT/CN2024/083009
(87) International publication number: WO 2024/199073

(57) **Abstract**

Embodiments of this application provide a communication method and a communication apparatus. The method includes: A first apparatus sends first information to an access network device through a core network, where the first information indicates the access network device to adjust a wireless air interface scheduling-free moment of a second apparatus based on a first moment, and the first moment is a service packet transmission moment of the second apparatus; and the access network device sends first configuration information to the second apparatus based on the first information, where the first configuration information includes an air interface scheduling-free slot resource allocated by the access network device to the second apparatus. When a time interval between the service packet transmission moment and the air interface scheduling moment that correspond to the second apparatus is large, in this application, the air interface scheduling moment corresponding to the second apparatus is adjusted, to reduce a transmission delay and improve communication performance.

## Description

This application claims priority to Chinese Patent Application No. 202310354091.8, filed with the China National Intellectual Property Administration on March 27, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With development of communication technologies, a wireless communication system exemplified by a 5^{th} generation (5^{th} generation, 5G) communication system have gradually become a connection medium for industrial communication systems. Industrial devices at production sites can now access a wireless communication network, such that the industrial devices can communicate with each other through the wireless communication system.

In actual industrial scenarios, the industrial devices may be classified into two types: devices that are capable of being scheduled and orchestrated by a wireless communication system, and devices that are incapable of being scheduled and orchestrated by the wireless communication system. The coexistence of the two types of devices brings challenges in reducing a data transmission delay, maximizing utilization of wireless communication resources, balancing a quantity of devices configured on the wireless communication resources, and enhancing communication performance, which are topics that are currently focal points of research.

### SUMMARY

Embodiments of this application provide a communication method and a communication apparatus, to reduce a time interval between a service packet transmission moment corresponding to the communication apparatus and an air interface scheduling moment in scenarios where the service packet transmission moment corresponding to the communication apparatus cannot be adjusted, thereby reducing a data transmission delay.

According to a first aspect, a communication method is provided. The method includes:
an access network device receives first information from a first apparatus through a core network, where the first information indicates the access network device to adjust a wireless air interface scheduling-free moment of a second apparatus based on a first moment, the first moment is a service packet transmission moment of the second apparatus, the second apparatus is an unorchestratable apparatus, and the unorchestratable apparatus is an apparatus whose service packet transmission moment is incapable of being orchestrated by a wireless communication system; and the access network device sends first configuration information to the second apparatus based on the first information, where the first configuration information includes an air interface scheduling-free slot resource allocated by the access network device to the second apparatus.

According to the communication method provided in this application, the access network device adjusts the air interface scheduling moment of the second apparatus based on the received first information, to further reduce a time interval between the service packet transmission moment and the air interface scheduling moment of the second apparatus, and shorten a data transmission delay. In addition, in comparison with the conventional technology, in the technical solutions provided in this application, network-wide devices do not need to be upgraded, and cost consumption is reduced.

With reference to the first aspect, in some implementations, when a quantity of devices occupying a wireless communication resource is greater than or equal to a first threshold at the first moment,
the method further includes:
the access network device sends first indication information to the first apparatus through the core network, where the first indication information indicates the first apparatus to adjust a service packet transmission moment of a third apparatus, the first indication information includes a second moment and/or a first offset time, the second moment is an adjusted service packet transmission moment of the third apparatus, the third apparatus is an orchestratable apparatus, the orchestratable apparatus is an apparatus whose service packet transmission moment is capable of being adjusted by a wireless communication system, and the service packet transmission moment, before adjustment, of the third apparatus is the first moment.

That the quantity of devices occupying the wireless communication resource is greater than or equal to the first threshold at the first moment may also be understood as that a quantity of devices loaded on the wireless communication resource is greater than or equal to the first threshold at the first moment.

Based on the foregoing technical solution, the access network device adjusts the air interface scheduling moment corresponding to the second apparatus to the service packet transmission moment (the first moment) corresponding to the second apparatus. When the wireless communication resource at the first moment is in a congested state, the access network device further needs another apparatus (for example, the third apparatus) at the first moment. The service packet transmission moment corresponding to the third apparatus is capable of being scheduled by the wireless communication system. The access network device determines the third apparatus, and sends the first indication information to the first apparatus, where the first indication information indicates the first apparatus to adjust the service packet transmission moment corresponding to the third apparatus, so that both the air interface scheduling moment and the service packet transmission moment of the second apparatus are the first moment, and the time interval between the air interface scheduling moment and the service packet transmission moment of the second apparatus is approximately 0. This reduces a data transmission delay.

It should be understood that, that the access network device indicates the first apparatus to adjust the service packet transmission moment of the third apparatus may be understood as that the access network device performs a smoothing operation on devices in different slots on the wireless communication resource, and reconfigures a device in a congested slot to another corresponding vacant slot.

With reference to the first aspect, in some implementations, before the access network device receives the first information through the core network, the method further includes:
the access network device receives second information from the second apparatus, where the second information includes a first value, the first value is a time difference before the first moment and a third moment, the third moment is the wireless air interface scheduling-free moment of the second apparatus, and the first value is greater than or equal to a second threshold; and
the access network device sends the second information to the first apparatus through the core network.

In a possible implementation, the access network device receives the first moment sent by the second apparatus, and the access network device determines the first value based on the first moment and the third moment. The third moment may be determined by the access network device. In other words, the second apparatus may alternatively directly send the first moment to the access network device, and send the second information to the access network device without determining whether the first value is greater than or equal to the second threshold.

In another possible implementation method, when the second apparatus determines that the first moment is greater than or equal to a threshold, the second apparatus sends the first moment to the access network device, and the access network device determines the first value based on the first moment and the third moment, and sends information including the first value to the first apparatus through the core network.

Based on the foregoing technical solution, when a time interval between the first moment and the third moment that correspond to the second apparatus, namely, the first value, is greater than or equal to a threshold, the access network device receives the second information from the second apparatus. The access network device sends the second information to the first apparatus via a core network device, and the first apparatus further determines the first information.

With reference to the first aspect, in some implementations, the access network device sends second configuration information to the third apparatus, where the second configuration information includes configuration information of a first scheduling-free resource, and the first scheduling-free resource and a second scheduling-free resource provide services for the third apparatus in a first time period; and
the second scheduling-free resource is a scheduling-free resource that provides a service for the third apparatus before the access network device sends the second configuration information to the third apparatus.

Based on the foregoing technical solution, the access network device configures the first scheduling-free resource for the third apparatus. Before the access network device configures the first scheduling-free resource for the third apparatus, the second scheduling-free resource provides the service for the third apparatus. Both the first scheduling-free resource and the second scheduling-free resource provide the services for the third apparatus in a same time period. When the service packet transmission moment of the third apparatus is adjusted, both the first scheduling-free resource and the second scheduling-free resource provide the services for the third apparatus. This ensures service continuity of the third apparatus.

With reference to the first aspect, in some implementations, the access network device sends deactivation information to the third apparatus, where the deactivation information is used to deactivate the second scheduling-free resource of the third apparatus.

It should be understood that the access network device may send the deactivation information based on a fixed time configured by the system, or the access network device sends the deactivation information based on feedback information of the first apparatus. The feedback information indicates whether the service packet transmission moment of the third apparatus is adjusted.

Based on the foregoing technical solution, after the service packet transmission moment of the third apparatus is adjusted, the access network device deactivates the second scheduling-free resource corresponding to the third apparatus, to ensure communication performance of the third apparatus.

According to a second aspect, a communication method is provided. The method includes:
a communication apparatus receives configuration information of an access network device, where the configuration information includes configuration information of a first scheduling-free resource; and the communication apparatus receives indication information of a first apparatus, where the indication information indicates the communication apparatus to adjust a service packet transmission moment from a first moment to a second moment, a scheduling-free resource corresponding to the first moment is a second scheduling-free resource, and a scheduling-free resource corresponding to the second moment is a first scheduling-free resource; and the first scheduling-free resource and the second scheduling-free resource provide services for the communication apparatus in a first time period.

According to the communication method provided in this application, the communication apparatus receives the configuration information of the access network device, and the configuration information includes a new scheduling-free resource reconfigured by the access network device for the communication apparatus. The communication apparatus receives the indication information from the first apparatus, where the indication information indicates the communication apparatus to adjust the service packet transmission moment from the first moment to the second moment. In any time period in which the service packet transmission moment of the communication apparatus is adjusted, a plurality of scheduling-free resources all provide services for the communication apparatus. This ensures service continuity of the communication apparatus and improves user experience.

With reference to the second aspect, in some implementations, the communication apparatus receives deactivation information of the access network device, where the deactivation information indicates the communication apparatus to deactivate the second scheduling-free resource.

Based on the foregoing technical solution, the communication apparatus receives the deactivation information, to deactivate a scheduling-free resource present before the service packet transmission moment is adjusted. This avoids a problem of a resource waste caused by occupying a plurality of scheduling-free resources for a long time by the communication apparatus.

With reference to the second aspect, in some implementations, the communication apparatus includes a second apparatus and a third apparatus.

That the communication apparatus receives the configuration information of the access network device includes:
the second apparatus receives the configuration information of the access network device.

That the communication apparatus receives the indication information of the first apparatus includes:
the third apparatus receives the indication information of the first apparatus.

Based on the foregoing technical solution, the communication apparatus may include a plurality of different apparatuses. For example, the communication apparatus includes the second apparatus and the third apparatus. The second apparatus is configured to receive related information about a scheduling-free resource configuration and/or air interface scheduling, and the third apparatus is configured to receive information related to service packet sending.

With reference to the second aspect, in some implementations,
that the communication apparatus receives the deactivation information of the access network device includes:
the second apparatus receives the deactivation information of the access network device.

According to a third aspect, a communication method is provided. The method includes: A first apparatus receives second information of an access network device through a core network, where the second information includes a first value, the first value is a time difference before a first moment and a third moment, the third moment is a wireless air interface scheduling-free moment of a second apparatus, and the first value is greater than or equal to a second threshold; and the first apparatus sends first information based on the second information, where the first information indicates the access network device to adjust the wireless air interface scheduling-free moment of the second apparatus based on the first moment, and the first moment is a service packet transmission moment of the second apparatus.

According to the method provided in this embodiment of this application, after determining, based on the obtained second information, that the second apparatus is an unorchestratable apparatus, the first apparatus sends the first information to indicate the access network device to adjust the air interface scheduling moment of the second apparatus, so that a time interval between the service packet transmission moment and the air interface scheduling moment of the second apparatus is reduced. In comparison with the conventional technology, network-wide devices do not need to be upgraded. This reduces cost consumption.

With reference to the third aspect, in some implementations, when a quantity of devices on a wireless communication resource at the first moment is greater than or equal to a first threshold, the first apparatus receives, through the core network, first indication information sent by the access network device, where the first indication information indicates the first apparatus to adjust a service packet transmission moment of a third apparatus, the first indication information includes a second moment and/or a first offset time, the second moment is an adjusted service packet transmission moment of the third apparatus, the third apparatus is an orchestratable apparatus, the orchestratable apparatus is an apparatus whose service packet transmission moment is capable of being adjusted by a wireless communication system, and the service packet transmission moment, before adjustment, of the third apparatus is the first moment.

With reference to the third aspect, in some implementations, that the first apparatus sends the first information to the access network device through the core network includes:
the first apparatus sends the first information to the access network device based on the second information and third information through the core network, where the third information is used to determine that the second apparatus is the unorchestratable apparatus, and the unorchestratable apparatus is an apparatus whose service packet transmission moment is incapable of being adjusted by the wireless communication system.

With reference to the third aspect, in some implementations, the third information includes one or more of the following:
an apparatus type, an apparatus model, manufacturer information, and apparatus attribute information.

With reference to the third aspect, in some implementations, the first apparatus sends second indication information to the third apparatus based on the first indication information, where the second indication information indicates the third apparatus to adjust the service packet transmission moment from the first moment to the second moment.

According to a fourth aspect, a communication method is provided, including: A first apparatus sends first information to an access network device through a core network, where the first information indicates the access network device to adjust a wireless air interface scheduling-free moment of a second apparatus based on a first moment, and the first moment is a service packet transmission moment of the second apparatus; the access network device receives, through the core network, the first information sent by the first apparatus; and the access network device sends first configuration information to the second apparatus based on the first information, where the first configuration information includes an air interface scheduling-free slot resource allocated by the access network device to the second apparatus.

According to the communication method provided in this application, the access network device adjusts the air interface scheduling moment of the second apparatus based on the received first information, to further reduce a time interval between the service packet transmission moment and the air interface scheduling moment of the second apparatus, and shorten a data transmission delay. In addition, in comparison with the conventional technology, in the technical solutions provided in this application, network-wide devices do not need to be upgraded, and cost consumption is reduced.

With reference to the fourth aspect, in some implementations, when a quantity of devices occupying a wireless communication resource is greater than or equal to a first threshold at the first moment,
the method further includes:
the access network device sends first indication information to the first apparatus through the core network, where the first indication information indicates the first apparatus to adjust a service packet transmission moment of a third apparatus, the first indication information includes a second moment and/or a first offset time, the second moment is an adjusted service packet transmission moment of the third apparatus, the third apparatus is an orchestratable apparatus, the orchestratable apparatus is an apparatus whose service packet transmission moment is capable of being adjusted by a wireless communication system, and the service packet transmission moment, before adjustment, of the third apparatus is the first moment; and the first apparatus receives the first indication information from the access network device through the core network.

Based on the foregoing technical solution, the access network device adjusts the air interface scheduling moment corresponding to the second apparatus to the service packet transmission moment (the first moment) corresponding to the second apparatus. When the wireless communication resource at the first moment is in a congested state, the access network device further needs another apparatus (for example, the third apparatus) at the first moment. The service packet transmission moment corresponding to the third apparatus is capable of being scheduled by the wireless communication system. The access network device determines the third apparatus, and sends the first indication information to the first apparatus, where the first indication information indicates the first apparatus to adjust the service packet transmission moment corresponding to the third apparatus, so that both the air interface scheduling moment and the service packet transmission moment of the second apparatus are the first moment, and the time interval between the air interface scheduling moment and the service packet transmission moment of the second apparatus is approximately 0. This reduces a data transmission delay.

With reference to the fourth aspect, in some implementations, before the first apparatus sends the first information to the access network device through the core network, the method further includes:
the access network device receives second information from the second apparatus, where the second information includes a first value, the first value is a time difference before the first moment and a third moment, the third moment is the wireless air interface scheduling-free moment of the second apparatus, and the first value is greater than or equal to a second threshold; and
the access network device sends the second information to the first apparatus through the core network.

Based on the foregoing technical solution, when a time interval between the first moment and the third moment that correspond to the second apparatus, namely, the first value, is greater than or equal to a threshold, the access network device receives the second information from the second apparatus. The access network device sends the second information to the first apparatus via a core network device, and the first apparatus further determines the first information.

With reference to the fourth aspect, in some implementations, the first apparatus receives, through the core network, the second information sent by the access network device.

That the first apparatus sends the first information to the access network device through the core network includes:
the first apparatus sends the first information to the access network device based on the second information and third information through the core network, where the third information is used to determine that the second apparatus is an unorchestratable apparatus, and the unorchestratable apparatus is an apparatus whose service packet transmission moment is incapable of being adjusted by the wireless communication system.

With reference to the fourth aspect, in some implementations, the third information includes one or more of the following:
an apparatus type, an apparatus model, manufacturer information, and apparatus attribute information.

With reference to the fourth aspect, in some implementations, the first apparatus receives, through the core network, the first indication information sent by the access network device; and
the first apparatus sends second indication information to the third apparatus based on the first indication information, where the second indication information indicates the third apparatus to adjust the service packet transmission moment from the first moment to the second moment.

With reference to the fourth aspect, in some implementations, the access network device sends second configuration information to the third apparatus, where the second configuration information includes configuration information of a first scheduling-free resource, and the first scheduling-free resource and a second scheduling-free resource provide services for the third apparatus in a first time period; and
the second scheduling-free resource is a scheduling-free resource that provides a service for the third apparatus before the access network device sends the second configuration information to the third apparatus.

Based on the foregoing technical solution, the third apparatus receives the second configuration information of the access network device, where the second configuration information includes a new scheduling-free resource reconfigured by the access network device for the third apparatus. The third apparatus receives the second indication information from the first apparatus, where the second indication information indicates the third apparatus to adjust the service packet transmission moment from the first moment to the second moment. In any time period in which the service packet transmission moment of the third apparatus is adjusted, a plurality of scheduling-free resources all provide services for the third apparatus. This ensures service continuity of the third apparatus and improves user experience.

With reference to the fourth aspect, in some implementations, a scheduling-free resource corresponding to the first moment is the second scheduling-free resource, and a scheduling-free resource corresponding to the second moment is the first scheduling-free resource.

With reference to the fourth aspect, in some implementations, the access network device sends deactivation information to the third apparatus, where the deactivation information is used to deactivate the second scheduling-free resource of the third apparatus.

Based on the foregoing technical solution, the third apparatus receives the deactivation information, to deactivate a scheduling-free resource present before the service packet transmission moment is adjusted. This avoids a problem of a resource waste caused by occupying a plurality of scheduling-free resources for a long time by the third apparatus.

According to a fifth aspect, a communication apparatus is provided. The apparatus includes: a transceiver unit, configured to receive first information from a first apparatus through a core network, where the first information indicates the access network device to adjust a wireless air interface scheduling-free moment of a second apparatus based on a first moment, the first moment is a service packet transmission moment of the second apparatus, the second apparatus is an unorchestratable apparatus, and the unorchestratable apparatus is an apparatus whose service packet transmission moment is incapable of being orchestrated by a wireless communication system; and the transceiver unit is further configured to send first configuration information to the second apparatus based on the first information, where the first configuration information includes an air interface scheduling-free slot resource allocated by the access network device to the second apparatus.

With reference to the fifth aspect, in some implementations, when a quantity of devices occupying a wireless communication resource is greater than or equal to a first threshold at the first moment,
the transceiver unit is further configured to send first indication information to the first apparatus through the core network, where the first indication information indicates the first apparatus to adjust a service packet transmission moment of a third apparatus, the first indication information includes a second moment and/or a first offset time, the second moment is an adjusted service packet transmission moment of the third apparatus, the third apparatus is an orchestratable apparatus, the orchestratable apparatus is an apparatus whose service packet transmission moment is capable of being adjusted by a wireless communication system, and the service packet transmission moment, before adjustment, of the third apparatus is the first moment.

With reference to the fifth aspect, in some implementations, the transceiver unit is further configured to receive second information from the second apparatus, where the second information includes a first value, the first value is a time difference before the first moment and a third moment, the third moment is the wireless air interface scheduling-free moment of the second apparatus, and the first value is greater than or equal to a second threshold.

The transceiver unit is further configured to send the second information to the first apparatus through the core network.

With reference to the fifth aspect, in some implementations, the transceiver unit is further configured to send second configuration information to the third apparatus, where the second configuration information includes configuration information of a first scheduling-free resource, and the first scheduling-free resource and a second scheduling-free resource provide services for the third apparatus in a first time period; and the second scheduling-free resource is a scheduling-free resource that provides a service for the third apparatus before the access network device sends the second configuration information to the third apparatus.

With reference to the fifth aspect, in some implementations, the transceiver unit is further configured to send deactivation information to the third apparatus, where the deactivation information is used to deactivate the second scheduling-free resource of the third apparatus.

According to a sixth aspect, a communication apparatus is provided. The apparatus includes: a transceiver unit, configured to receive configuration information of an access network device, where the configuration information includes configuration information of a first scheduling-free resource; the transceiver unit is further configured to receive indication information of a first apparatus, where the indication information indicates the communication apparatus to adjust a service packet transmission moment from a first moment to a second moment, a scheduling-free resource corresponding to the first moment is a second scheduling-free resource, and a scheduling-free resource corresponding to the second moment is a first scheduling-free resource; and the first scheduling-free resource and the second scheduling-free resource provide services for the communication apparatus in a first time period.

With reference to the sixth aspect, in some implementations, the transceiver unit is further configured to receive deactivation information of the access network device, where the deactivation information indicates the communication apparatus to deactivate the second scheduling-free resource.

According to a seventh aspect, a communication apparatus is provided, including: the transceiver unit, configured to receive second information of an access network device through a core network, where the second information includes a first value, the first value is a time difference before a first moment and a third moment, the third moment is a wireless air interface scheduling-free moment of a second apparatus, and the first value is greater than or equal to a second threshold; and the transceiver unit is further configured to send first information based on the second information, where the first information indicates the access network device to adjust the wireless air interface scheduling-free moment of the second apparatus based on the first moment, and the first moment is a service packet transmission moment of the second apparatus.

With reference to the seventh aspect, in some implementations, when a quantity of devices occupying a wireless communication resource is greater than or equal to a first threshold at the first moment, the transceiver unit is further configured to receive, through the core network, first indication information sent by the access network device, where the first indication information indicates the first apparatus to adjust a service packet transmission moment of a third apparatus, the first indication information includes a second moment and/or a first offset time, the second moment is an adjusted service packet transmission moment of the third apparatus, the third apparatus is an orchestratable apparatus, the orchestratable apparatus is an apparatus whose service packet transmission moment is capable of being adjusted by a wireless communication system, and the service packet transmission moment, before adjustment, of the third apparatus is the first moment.

With reference to the seventh aspect, in some implementations, that the transceiver unit is further configured to send the first information to the access network device through the core network includes:
the transceiver unit is further configured to send the first information to the access network device based on the second information and third information through the core network, where the third information is used to determine that the second apparatus is an unorchestratable apparatus, and the unorchestratable apparatus is an apparatus whose service packet transmission moment is incapable of being adjusted by the wireless communication system.

With reference to the seventh aspect, in some implementations, the third information includes one or more of the following:
an apparatus type, an apparatus model, manufacturer information, and apparatus attribute information.

With reference to the seventh aspect, in some implementations, the transceiver unit is further configured to send second indication information to the third apparatus based on the first indication information, where the second indication information indicates the third apparatus to adjust the service packet transmission moment from the first moment to the second moment.

According to an eighth aspect, a communication apparatus is provided, including: a transceiver unit, configured to send first information to an access network device through a core network, where the first information indicates the access network device to adjust a wireless air interface scheduling-free moment of a second apparatus based on a first moment, and the first moment is a service packet transmission moment of the second apparatus; the transceiver unit is further configured to receive, through the core network, the first information sent by a first apparatus; and the access network device sends first configuration information to the second apparatus based on the first information, where the first configuration information includes an air interface scheduling-free slot resource allocated by the access network device to the second apparatus.

With reference to the eighth aspect, in some implementations, when a quantity of devices occupying a wireless communication resource is greater than or equal to a first threshold at the first moment, the transceiver unit is further configured to send first indication information to the first apparatus through the core network, where the first indication information indicates the first apparatus to adjust a service packet transmission moment of a third apparatus, the first indication information includes a second moment and/or a first offset time, the second moment is an adjusted service packet transmission moment of the third apparatus, the third apparatus is an orchestratable apparatus, the orchestratable apparatus is an apparatus whose service packet transmission moment is capable of being adjusted by a wireless communication system, and the service packet transmission moment, before adjustment, of the third apparatus is the first moment; and the first apparatus receives the first indication information from the access network device through the core network.

With reference to the eighth aspect, in some implementations, before the transceiver unit is further configured to send the first information to the access network device through the core network, the method further includes: The transceiver unit is further configured to receive second information from the second apparatus, where the second information includes a first value, the first value is a time difference before the first moment and a third moment, the third moment is the wireless air interface scheduling-free moment of the second apparatus, and the first value is greater than or equal to a second threshold; and
the transceiver unit is further configured to send the second information to the first apparatus through the core network.

With reference to the eighth aspect, in some implementations, the transceiver unit is further configured to receive, through the core network, the second information sent by the access network device.

That the transceiver unit is further configured to send the first information to the access network device through the core network includes:
the transceiver unit is further configured to send the first information to the access network device based on the second information and third information through the core network, where the third information is used to determine that the second apparatus is an unorchestratable apparatus, and the unorchestratable apparatus is an apparatus whose service packet transmission moment is incapable of being adjusted by the wireless communication system.

With reference to the eighth aspect, in some implementations, the third information includes one or more of the following:
an apparatus type, an apparatus model, manufacturer information, and apparatus attribute information.

With reference to the eighth aspect, in some implementations, the transceiver unit is further configured to receive, through the core network, the first indication information sent by the access network device.

The transceiver unit is further configured to send second indication information to the third apparatus based on the first indication information, where the second indication information indicates the third apparatus to adjust the service packet transmission moment from the first moment to the second moment.

With reference to the eighth aspect, in some implementations, the transceiver unit is further configured to send second configuration information to the third apparatus, where the second configuration information includes configuration information of a first scheduling-free resource, and the first scheduling-free resource and a second scheduling-free resource provide services for the third apparatus in a first time period; and
the second scheduling-free resource is a scheduling-free resource that provides a service for the third apparatus before the access network device sends the second configuration information to the third apparatus.

With reference to the eighth aspect, in some implementations, a scheduling-free resource corresponding to the first moment is the second scheduling-free resource, and a scheduling-free resource corresponding to the second moment is the first scheduling-free resource.

With reference to the eighth aspect, in some implementations, the transceiver unit is further configured to send deactivation information to the third apparatus, where the deactivation information is used to deactivate the second scheduling-free resource of the third apparatus.

According to a ninth aspect, a communication apparatus is provided. The apparatus is configured to perform the method provided in the first aspect, the second aspect, or the third aspect, or the apparatus is configured to perform the method provided in the fourth aspect. Specifically, the apparatus may include a unit and/or a module, for example, a processing unit and/or a transceiver unit (or referred to as a communication unit), configured to perform the method provided in any one of the implementations of the first aspect, the second aspect, the third aspect, and the fourth aspect.

In an implementation, the apparatus is a communication device (for example, a terminal device or a network device). When the apparatus is a communication device, the communication unit may be a transceiver or a transceiver unit, or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a tenth aspect, a communication apparatus is provided. The apparatus includes: a memory, configured to store a program; and at least one processor, configured to execute the computer program or instructions stored in the memory, to perform the method provided in any one of the implementations of the first aspect, the second aspect, the third aspect, and the fourth aspect.

In an implementation, the apparatus is a communication device (for example, a terminal device or a network device).

In another implementation, the apparatus is a chip, a chip system, or a circuit used in a communication device (for example, a terminal device or a network device).

According to an eleventh aspect, this application provides a processor, configured to perform the methods provided in the foregoing aspects.

Operations such as sending and obtaining/receiving related to the processor may be understood as operations such as output and input of the processor, or sending and receiving operations performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable medium stores program code to be executed by a device. The program code is used to perform the method provided in any one of the implementations of the first aspect, the second aspect, the third aspect, and the fourth aspect.

According to a thirteenth aspect, a computer program product including instructions is provided. When the computer program product is run on a computer, the computer is caused to perform the method provided in any one of the implementations of the first aspect, the second aspect, the third aspect, and the fourth aspect.

According to a fourteenth aspect, a chip is provided. The chip includes a processor and a communication interface. The processor reads, through the communication interface, instructions stored in a memory, to perform the method provided in any one of the implementations of the first aspect, the second aspect, the third aspect, and the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect, the second aspect, the third aspect, and the fourth aspect.

### BRIEF DESCRIPTION OF DRAWINGS

FIG. 1 is a diagram of a network architecture;
FIG. 2 is a diagram in which an industrial device accesses a wireless communication system;
FIG. 3 is a diagram of a network communication architecture of an industrial field according to this application;
FIG. 4 is a schematic flowchart of communication data transmission of an industrial device according to this application;
FIG. 5 is another schematic flowchart of communication data transmission of an industrial device according to this application;
FIG. 6 is a schematic flowchart of a communication method according to an embodiment of this application;
FIG. 7A and FIG. 7B are a schematic flowchart of another communication method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

The following describes the technical solutions of embodiments in this application with reference to the accompanying drawings.

The technical solutions provided in this application may be applied to various communication systems, for example, a 5^{th} generation (5^{th} generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6^{th} generation (6^{th} generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

First, a network architecture applicable to this application is briefly described.

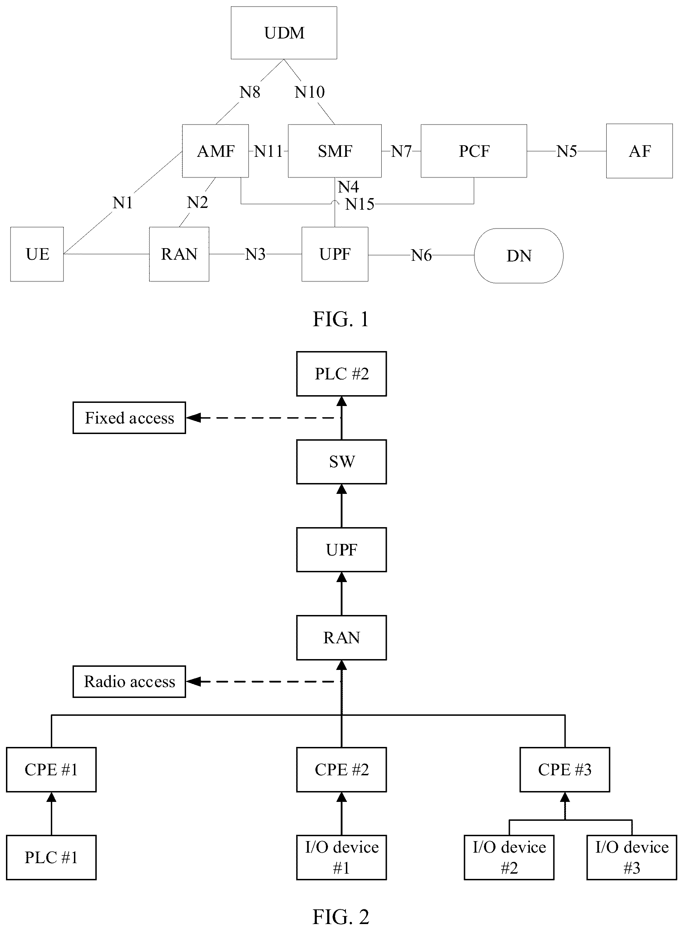

As an example, FIG. 1 is a diagram of a network architecture.

As shown in FIG. 1, a 5G system (5^{th} generation system, 5GS) is used as an example of the network architecture. The network architecture may include three parts: a user equipment (user equipment, UE) part, a data network (data network, DN) part, and an operator network part. The operator network may include one or more of the following network elements: a (radio) access network ((radio) access network, (R)AN) device, a user plane function (user plane function, UPF) network element, an access and mobility management function (access and mobility management function, AMF) network element, a session management function (session management function, SMF) network element, a policy control function (policy control function, PCF) network element, an application function (application function, AF) network element, and a unified data management (unified data management, UDM) network element. In the foregoing operator network, a part other than a RAN part may be referred to as a core network part. In this application, the user equipment, the (radio) access network device, the UPF network element, the AMF network element, the SMF network element, the PCF network element, the AF network element, and the UDM network element are respectively referred to as a UE, a (R)AN device, a UPF, an AMF, an SMF, a PCF, a UDM, and an AF for short.

The following briefly describes the network elements in FIG. 1.
1. The UE mainly accesses a 5G network through a wireless air interface and obtains a service. The UE interacts with the RAN through the air interface, and interacts with the AMF in the core network by using non-access stratum (non-access stratum, NAS) signaling.

The UE in embodiments of this application may also be referred to as a terminal device, a user, an access terminal, a subscriber unit, a subscriber station, a mobile station, a remote station, a remote terminal, a mobile device, a user terminal, a terminal, a wireless communication device, a user agent, or a user apparatus. The UE may be a cellular phone, a smartwatch, a wireless data card, a mobile phone, a tablet computer, a personal digital assistant (personal digital assistant, PDA) computer, a wireless modem, a handheld device, a laptop computer, a machine-type communication (machine-type communication, MTC) terminal, a computer with a wireless transceiver function, an internet of things terminal, a virtual reality terminal device, an augmented reality terminal device, a wearable device, a vehicle, a terminal in device-to-device (device-to-device, D2D) communication, a terminal in vehicle-to-everything (vehicle-to-everything, V2X) communication, a terminal in machine-type communication (machine-type communication, MTC), a terminal in an internet of things (internet of things, IoT), a terminal in a smart office, a terminal in industrial control, a terminal in self driving, a terminal in remote surgery, a terminal in a smart grid, a terminal in transportation security, a terminal in a smart city, a terminal in a smart home, or a terminal in satellite communication (for example, a satellite phone or a satellite terminal). The UE may alternatively be a customer-premises equipment (customer-premises equipment, CPE), a telephone, a router, a network switch, a residential gateway (residential gateway, RG), a set-top box, a fixed mobile convergence product, a home networking adapter, or an internet access gateway.

A specific technology and a specific device form that are used by the UE are not limited in embodiments of this application.

### 2. (R)AN device

The (R)AN device may provide, for an authorized user in a specific area, a function of accessing a communication network, and may specifically include a wireless network device in a 3^{rd} generation partnership project (3^{rd} generation partnership project, 3GPP) network, or may include an access point in a non-3GPP (non-3GPP) network. For ease of description, the following uses an AN device for representation.

The AN device may use different radio access technologies. Currently, there are two types of radio access technologies: a 3GPP access technology (for example, a radio access technology used in a 3^{rd} generation (3^{rd} generation, 3G) system, a 4^{th} generation (4^{th} generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), or code division multiple access (code division multiple access, CDMA). The AN device may allow interconnection and interworking performed between a terminal device and a 3GPP core network by using a non-3GPP technology.

The AN device can be responsible for functions such as wireless resource management, quality of service (quality of service, QoS) management, and data compression and encryption on an air interface side. The AN device provides an access service for the terminal device, to complete forwarding of a control signal and user data between the UE and the core network (5^{th} generation core, 5GC).

For example, the AN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a base station (base station, BS) in WiMAX, a radio relay node, a radio backhaul node, a transmission point (transmission point, TP), a transmission and reception point (transmission and reception point, TRP), or the like; or may be a gNB or a transmission point (a TRP or a TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next-generation 6G communication system.

A specific technology and a specific device form that are used by the AN device are not limited in embodiments of this application.

### 3. UPF

The UPF, serving as an interface to the data network, is mainly responsible for functions such as user plane data forwarding, session/flow-level charging statistics collection, bandwidth throttling, data flow forwarding, and QoS control. For example, the UPF may receive user plane data from the DN, and send the user plane data to a terminal device via the AN device. The UPF may alternatively receive user plane data from a terminal device via the AN device, and forward the user plane data to the DN.

### 4. DN

The DN is an operator network mainly used for providing a data service for the UE, for example, an Internet (Internet), a third-party service network, or an internet protocol multimedia service (internet protocol multimedia service, IMS) network. An application server (application server, AS) may be a part of the DN.

### 5. AMF

The AMF is mainly responsible for functions such as mobility management and access authentication/authorization. In addition, the AMF network element is further responsible for transferring user policies between the UE and the PCF.

### 6. SMF

The SMF mainly performs functions such as session management (such as session establishment, modification, and release), PCF-delivered control policy execution, UPF selection and control, UE internet protocol (internet protocol, IP) address allocation and management, and the like.

### 7. PCF

The PCF is mainly responsible for policy control functions such as a session-level or service flow-level charging, QoS bandwidth guarantee, mobility management, and UE policy decision-making, and the like.

### 8. AF

The AF mainly transfers a requirement of an application side on a network side, for example, a QoS requirement or user status event subscription. The AF may be a third-party function entity or an application service deployed by an operator, for example, an IMS voice call service. When interacting with a core network, an application function entity of a third-party application may further perform authorization processing via an NEF. For example, a third-party application function directly sends a request message to the NEF, and the NEF determines whether the AF is allowed to send the request message. If verification succeeds, the NEF forwards the request message to a corresponding PCF or UDM.

### 9. NEF

The NEF is mainly used for secure exposure of services, capabilities, and the like provided by 3GPP network functions.

### 10. UDM

The UDM is mainly responsible for functions such as subscription data management, user access authorization, and the like.

In the network architecture shown in FIG. 1, the network elements may communicate with each other through interfaces, and an interface between the network elements may be a point-to-point interface, or may be a service-based interface. The following briefly describes the interfaces in FIG. 1.
1. An N7 interface is an interface between the PCF and the SMF, and is configured to deliver a control policy at a PDU session granularity and a service flow granularity.
2. An N15 interface is an interface between the PCF and the AMF, and is configured to deliver a UE mobility control policy and a network selection control policy.
(3) An N5 interface is an interface between the AF and the PCF, and is configured to: deliver an application service request (carrying a quality of service QoS requirement of a service on a bandwidth, a resource preemption priority, or the like) and report a network event (for example, a type of a radio access network of a user, and an access mode of 3G, 4G, or the like).
(4) An N4 interface is an interface between the SMF and the UPF, and is configured to transfer information between a control plane and a user plane, including: delivery of a forwarding rule, a QoS control rule, and a traffic statistics collection rule from the control plane to the user plane; and reporting of user plane information (such as application information and usage monitoring information that are detected on the user plane).
(5) An N11 interface is an interface between the SMF and the AMF, and is configured to: transfer user plane tunnel information between the RAN and the UPF, transfer a control message to be sent to the UE, transfer wireless resource control information to be sent to the RAN, and the like.
(6) An N2 interface is an interface between the AMF and the RAN, and is configured to: transfer radio bearer control information from a core network side to the RAN, and the like.
(7) An N1 interface is an interface between the AMF and the UE, is access-irrelevant, and is configured to: transfer a QoS control rule to the UE, and the like.

It should be understood that the network architecture shown above is merely an example for description, and a network architecture applicable to embodiments of this application is not limited thereto. Any network architecture that can implement functions of the network elements is applicable to embodiments of this application.

It should be further understood that the functions or the network elements, for example, the AMF, the SMF, the UPF, the PCF, the UDM, and the AF shown in FIG. 1 may be understood as network elements configured to implement different functions, and for example, may be combined into a network slice according to a requirement. These network elements may be independent devices, or may be integrated into a same device to implement different functions, or may be network elements in a hardware device, or may be software functions running on dedicated hardware, or may be instantiated virtualization functions on a platform (for example, a cloud platform). Specific forms of the network elements are not limited in this application.

It should be further understood that the foregoing names are defined merely for ease of distinguishing between different functions, and should not constitute any limitation on this application. This application does not exclude a possibility of using other names in a 6G network and another future network. For example, in the 6G network, some or all of the foregoing network elements may still use terms in 5G, or may use other names.

With development of communication technologies, a wireless communication system represented by a 5G communication system gradually becomes a connection medium of an industrial communication system. An industrial device on an industrial field may access the wireless communication system, and communicate with another industrial device through the wireless communication system. In a possible manner, the industrial device, for example, a programmable logic controller (programmable logic controller, PLC) and an input/output (input/output, I/O) device on the industrial field may implement radio access through a device, for example, a CPE/gateway. This can provide a more flexible networking manner for the industrial device, and better support a new industrial device that requires both mobility and flexible networking, for example, an automated guided vehicle (automated guided vehicle, AGV).

It should be understood that, in the future, the wireless communication system may further become a connection medium of another communication system. In this application, a 5G communication system is used as an example of the wireless communication system, and an industrial communication system is used as an example of the another communication system, to specifically describe a communication method in this application. The communication method provided in this application is also applicable to another network environment. Details are not listed in this application.

FIG. 2 is a diagram of communication between industrial devices through a wireless communication system. The wireless communication system in FIG. 2 may be the communication system shown in FIG. 1, but this is not limited.

As shown in FIG. 2, the industrial devices may access the wireless communication network through CPEs. For example, a PLC #1 may establish a connection to a RAN through a CPE #1, an I/O device #1 may establish a connection to the RAN through a CPE #2, and an I/O device #2 and an I/O device #3 may establish connections to the RAN through a CPE #3.

It should be noted that one CPE may correspond to one or more industrial devices. For example, the CPE #1 corresponds to the PLC #1, and the CPE #3 corresponds to the I/O device #2 and the I/O device #3. It should be further noted that the industrial device may be connected to the CPE in a wired manner or a wireless manner. This is not limited in this application.

It should be further noted that, when the industrial device may have a radio access capability, alternatively, the industrial device may directly access the wireless communication network not through the CPE. The industrial device may also establish a connection to a UPF through a switch (switch, SW). For example, the PLC #2 may establish a connection to the UPF through the SW. The industrial device may be connected to the SW in a wired manner.

The industrial devices may communicate with each other through the wireless communication system. In a possible implementation, an industrial device at a transmit end establishes a connection to the wireless communication system through a CPE, and then sends data or a signal to the UPF via the CPE and a RAN. The UPF sends the received data or signal to a RAN accessed by an industrial device at a receive end, and then sends the received data or signal to the industrial device at the receive end.

Communication between the PLC #1 and the I/O device #1 is used as an example. The PLC #1 sends data or a signal to the CPE #1, the CPE #1 accesses the RAN, and sends the data or the signal to the RAN. The RAN sends the data or the signal to the UPF. The UPF sends the received data or signal to the I/O device #1. The I/O device #1 accesses the RAN through the CPE #2. The RAN sends the received data or signal to the I/O device #1 via the CPE #2. For more detailed descriptions, refer to related content in 3GPP 23.501 4.4.6. Details are not described herein again.

In comparison with using a wired connection medium, a network status of the wireless communication system constantly changes. The constantly changing network status of the wireless communication system affects a service.

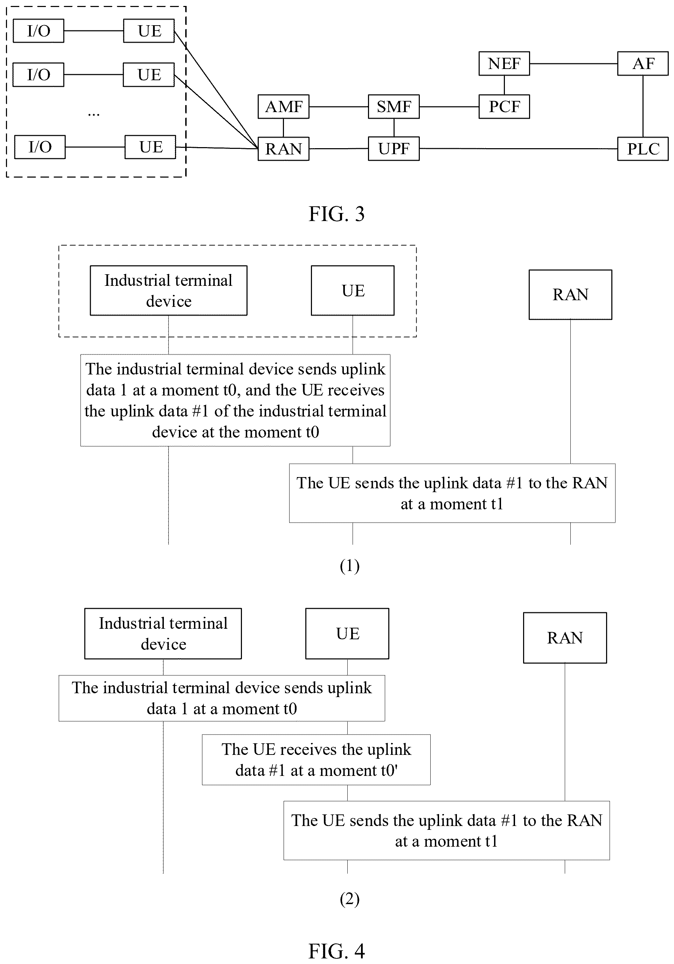

FIG. 3 is a diagram of a network communication architecture of an industrial field according to this application.

As shown in FIG. 3, in a 5G industrial scenario, communication between industrial devices such as a PLC and an I/O device is used as an example, to further describe an example in which the PLC and the I/O device perform industrial communication with each other over a 5G wireless communication system.

In an example, the I/O device sends data or a signal to a UE in the 5G wireless communication system, the UE accesses a RAN, the RAN sends the received data or signal to a UPF, and the UPF transmits the data or the signal to the PLC through an N6 interface. Alternatively, the PLC sends data or a signal to a UPF through an N6 interface, the UPF transmits the data or the signal to a UE via a RAN, and the UE transmits the data or the signal to the I/O device.

It should be understood that the UE in FIG. 3 may be a CPE, a telephone, a router, a network switch, an RG, a set-top box, a fixed mobile convergence product, a home networking adapter, an internet access gateway, or the like. This is not specifically limited in this application.

It should be further understood that in this process, the RAN may perform uplink pre-scheduling orchestration for the foregoing communication service flow based on a request of an AF or a 5GC, and provide uplink pre-scheduling configuration information for the UE via a configuration message. The uplink pre-scheduling configuration information may include one or more of the following information: a time domain resource, a frequency domain resource, modulation and coding, a cycle time, and the like.

An uplink scheduling principle is that, when the UE needs to transmit uplink data, the UE first needs to send an SR (scheduling request) on a PUCCH channel, then a base station grants an uplink grant to the UE, and finally the UE sends uplink data based on a location indicated by the uplink grant of the base station. In this case, the UE periodically sends SRs based on configuration. According to a specification, a maximum SR period can reach 80 ms. To reduce an uplink delay, uplink pre-scheduling is introduced. In an uplink pre-scheduling mechanism, the base station may actively grant a grant to the UE, and the base station does not need to wait for the UE to send an SR. In the uplink pre-scheduling mechanism, even if the UE does not need to send uplink data, the base station actively grants an uplink grant to the UE. This may cause a waste of uplink resources and introduce uplink interference.

FIG. 4 is a schematic flowchart of communication data transmission of an industrial device according to an embodiment of this application.

As shown in (1) in FIG. 4, when a transmission distance between a UE and an industrial terminal device is less than a threshold, that is, may be ignored, it may be considered that the UE and the industrial terminal device are disposed on a same apparatus. A moment at which the industrial terminal device (for example, a PLC or an I/O) sends uplink data #1 is t0, that is, the UE may receive the uplink data #1 from the industrial terminal device at the moment t0. The UE determines, based on time domain information and frequency domain information that are of uplink scheduling and that are configured by a RAN, to send the uplink data #1 to the RAN at a moment t1. That is, the UE receives the uplink data #1 from the industrial terminal device at the moment t0, and sends the uplink data #1 to the RAN at the moment t1.

It should be understood that the uplink data #1 received by the UE from the industrial terminal device at the moment t0 includes a preprocessing time of the UE for the uplink data #1.

As shown in (2) in FIG. 4, when a transmission distance between a UE and an industrial terminal device is large, a moment at which the industrial terminal device (for example, a PLC or an I/O) sends uplink data #1 is t0, the UE receives the uplink data #1 from the industrial terminal device at a moment t0', and the UE determines, based on time domain information and frequency domain information that are of uplink scheduling and that are configured by a RAN, to send the uplink data #1 to the RAN at a moment t1.

The moment t0 in FIG. 4 may also be referred to as a service packet transmission moment of the industrial terminal device in this embodiment of this application, and the moment t1 may also be referred to as an air interface scheduling moment of the UE in this embodiment of this application.

It should be understood that a time offset TimeOffset existing between the moment t1 and the moment t0 may increase a transmission delay of the industrial terminal device, and a larger value of the TimeOffset indicates a larger overall data transmission delay. A time interval between the service packet transmission moment t0 of the industrial terminal device and the air interface scheduling moment t1 of the UE corresponding to the industrial terminal device may introduce a cycle time (cycle time, CT) delay.

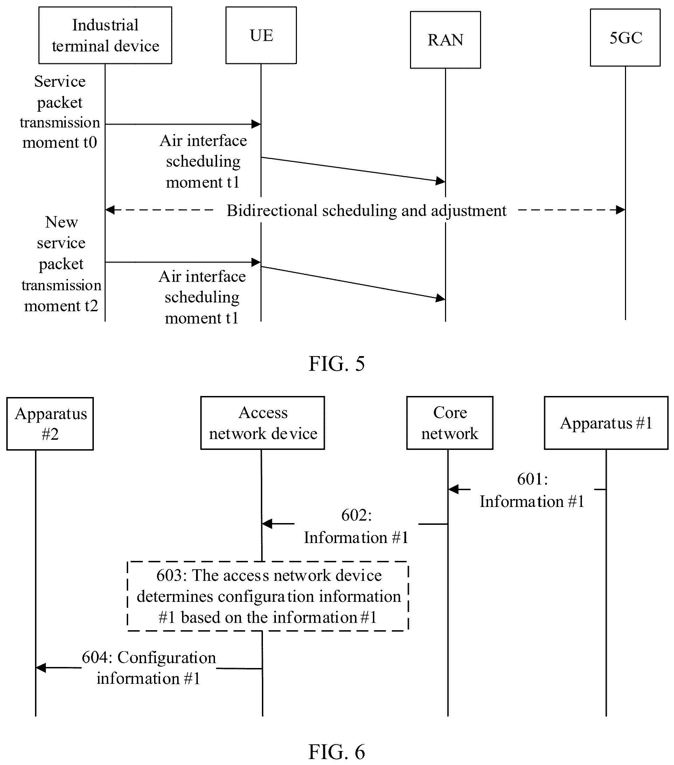

To match a packet sending moment of an industrial terminal device with a wireless air interface scheduling moment as much as possible, and reduce a transmission delay, FIG. 5 is another schematic flowchart of communication data transmission of an industrial device according to this application.

As shown in FIG. 5, an industrial terminal device is scheduled and adjusted by a 5GC, so that a service packet transmission moment of the industrial terminal device is scheduled and adjusted from a moment t0 to a moment t2, where a TimeOffset between the moment t2 and a moment t1 approaches "0".

It should be understood that the service packet transmission moment of the industrial terminal device is scheduled and adjusted by the 5GC, so that a value of a time offset between the service packet transmission moment and an air interface scheduling moment of the industrial terminal device approaches zero. This reduces a transmission delay and improves communication performance.

Based on the method shown in FIG. 5, during actual industrial communication, not all service packet transmission moments of industrial terminal devices are capable of being scheduled and adjusted by a wireless communication system. Some conventional industrial terminal devices may not be able to perform bidirectional collaboration with a 3GPP network. As a result, the wireless communication system may not be able to reduce a transmission delay by scheduling and adjusting the service packet transmission moment of this type of industrial terminal device.

It should be understood that, in this application, an industrial terminal device that complies with a 3GPP standard and an industrial terminal that can perform bidirectional collaboration with the wireless communication system, namely, an industrial terminal device whose service packet transmission moment is capable of being scheduled and adjusted by the wireless communication system, is referred to as a type-A industrial terminal device; and an industrial terminal device that does not comply with the 3GPP standard, namely, a conventional industrial terminal device that cannot perform bidirectional collaboration with the wireless communication system, is referred to as a type-B industrial terminal device, and a service packet transmission moment of the type-B industrial terminal device is incapable of being adjusted by the wireless communication system.

To reduce a data transmission delay of an industrial terminal device, in the conventional technology, all industrial terminal devices are upgraded, so that all the industrial terminal devices support a time sensitive network (time scalar network, TSN) behavior, or all the industrial terminal devices can give feedback in cooperation with a time offset provided by the 3GPP network. This reduces a transmission delay of the industrial terminal device.

However, during actual application, due to objective laws of ecosystem and industry development, in an industrial communication environment, a scenario in which the type-A industrial terminal device and the type-B industrial terminal device coexist is definitely present. In this scenario, a requirement for upgrading all network devices increases costs and makes it impossible to maximize wireless resource utilization.

In an actual industrial scenario, the type-A industrial terminal device and the type-B industrial terminal device coexist. In a 5G wireless communication system, how to reduce a delay of the type-B industrial terminal device in a communication transmission process and maximize wireless resource utilization is a problem to be addressed.

In view of the foregoing technical problem, an embodiment of this application provides a communication method. According to the communication method, a transmission delay of the type-B industrial terminal in a communication process can be reduced, and communication performance can be improved.

It should be understood that an industrial communication system is used as an example of the communication system provided in embodiments of this application, to describe in detail the communication method provided in this application.

It is assumed that the industrial communication system includes an apparatus #1 and an apparatus #2. Specifically, an industrial field enable service (industry field enable service, IFES) is used as an example of the apparatus #1 and an I/O device is used as an example of the apparatus #2, to describe in detail the communication method provided in embodiments of this application. Specific forms and names of the apparatus #1 and the apparatus #2 are not specifically limited in this application.

FIG. 6 is a schematic flowchart of a communication method according to an embodiment of this application. As shown in FIG. 6, the method includes the following steps.

601: An apparatus #1 sends information #1 to a core network.

Correspondingly, the core network receives the information #1 sent by the apparatus #1.

602: The core network sends the information #1 to an access network device.

Correspondingly, the access network device receives the information #1 sent by the core network.

Specifically, the apparatus #1 sends the information #1 to the access network device through the core network, and the access network device receives, through the core network, the information #1 sent by the apparatus #1.

The information #1 indicates the access network device to adjust a wireless air interface scheduling-free moment of an apparatus #2 based on a first moment.

It should be understood that the apparatus #2 is an unorchestratable apparatus, that is, a service packet transmission moment of the apparatus #2 is incapable of being orchestrated (or referred to as being scheduled or adjusted) by a wireless communication system. The information #1 indicates the access network device to adjust the wireless air interface scheduling-free moment of the apparatus #2, so that a time interval between the wireless air interface scheduling-free moment and the service packet transmission moment of the apparatus #2 is approximately 0. This reduces an overall data transmission delay and improves communication performance.

In an example, it is assumed that an I/O #1 is an unorchestratable apparatus, a service packet transmission moment of the I/O #1 is t0, and an air interface scheduling moment of the I/O #1 is t1. To reduce a data transmission delay of the I/O #1, an IFES may send the information #1 to the access network device through the core network. The information #1 indicates the access network device to adjust the air interface scheduling moment t1 of the I/O #1 to t0', where t0' is approximately equal to t0. In this way, a time interval between the service packet transmission moment and the air interface scheduling moment of the I/O #1 is approximately 0, and an overall data transmission delay is reduced.

603: The access network device determines configuration information #1 based on the information #1.

Specifically, after receiving, through the core network, the information #1 sent by the apparatus #1, the access network device determines the configuration information #1 based on the information #1.

The configuration information #1 includes an air interface scheduling-free slot resource allocated by the access network device to the apparatus #2.

It should be understood that step 603 is an internal implementation operation of the access network device. In a specific implementation process, step S603 is an optional step.

604: The access network device sends the configuration information #1 to the apparatus #2.

Correspondingly, the apparatus #2 receives the configuration information #1 sent by the access network device.

Specifically, after receiving the information #1 from the apparatus #1, the access network device determines the configuration information #1 based on the information #1, and the access network device sends the configuration information #1 to the apparatus #2.

It should be understood that the access network device further configures the corresponding air interface scheduling-free slot resource for the apparatus #2 based on a target slot (for example, the first moment) that is of the air interface scheduling-free moment of the apparatus #2 and that is included in the information #1, and sends the resource to the apparatus #2.

According to the method shown in FIG. 6, when the communication apparatus in the system is an unorchestratable apparatus (for example, the apparatus #2), to reduce a data communication delay of the unorchestratable apparatus, and avoid impact on communication performance caused by a large time interval between a service packet transmission moment and an air interface scheduling moment of the unorchestratable apparatus, the wireless communication system may further indicate the access network device to adjust the air interface scheduling moment of the unorchestratable apparatus, so that the time interval between the air interface scheduling moment and the service packet transmission moment of the unorchestratable apparatus is approximately 0. In this way, a data communication delay of the unorchestratable apparatus is reduced, and communication performance is improved.

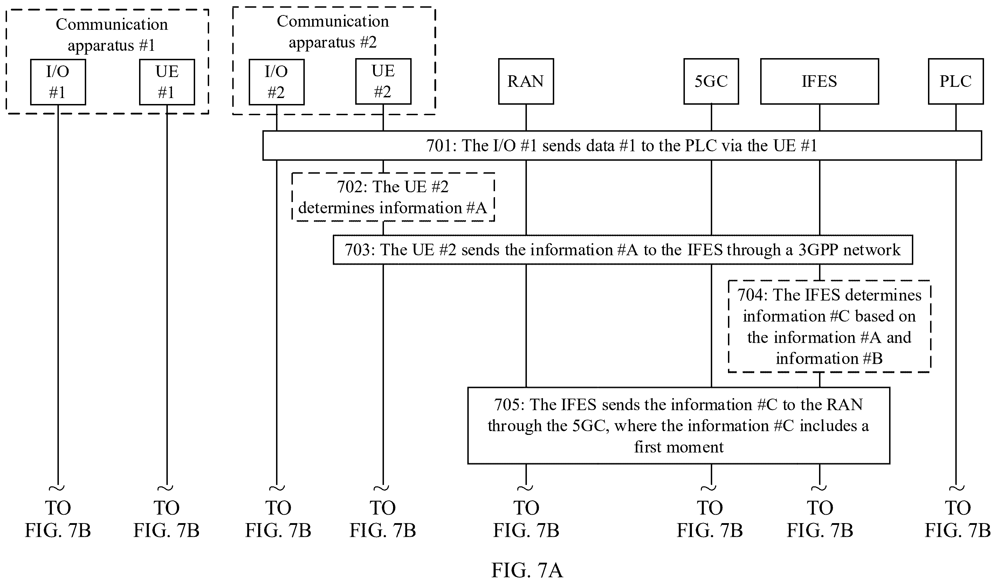

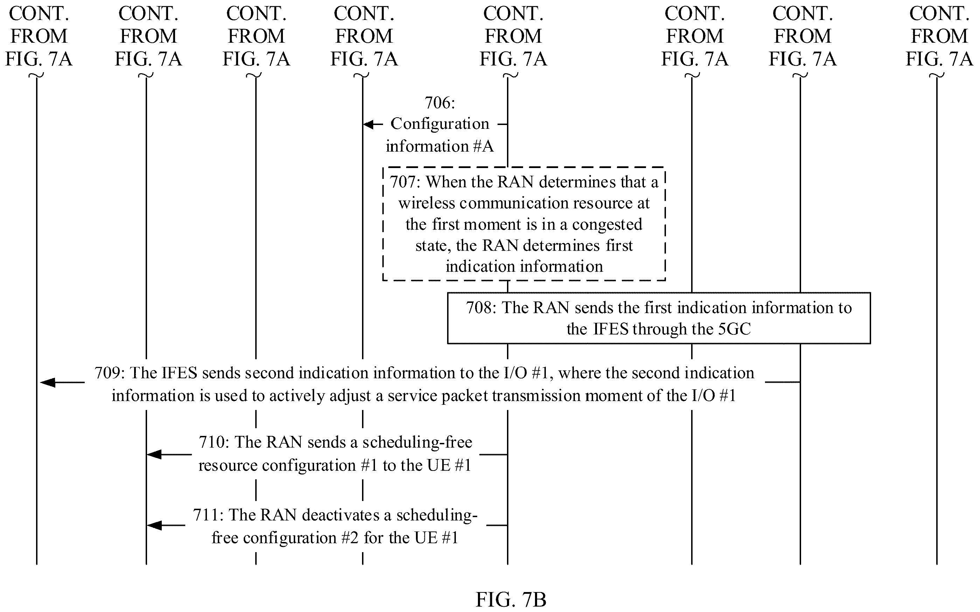

Based on the method shown in FIG. 6, the following uses an industrial communication scenario as an example to describe in detail the communication method provided in embodiments of this application with reference to FIG. 7A and FIG. 7B.

FIG. 7A and FIG. 7B are a schematic flowchart of another communication method according to an embodiment of this application.

An I/O #1 in FIG. 7A and FIG. 7B is a type-A industrial terminal device, a UE #1 corresponds to the I/O #1, and the UE #1 may access a 5G network through a wireless air interface to provide a service for the I/O #1. An I/O #2 is a type-B industrial terminal device, a UE #2 corresponds to the I/O #2, and the UE #2 may access the 5G network through a wireless air interface to provide a service for the I/O #2.

It should be understood that the I/O #1 and the UE #1 may be located in a same communication apparatus or in different communication apparatuses. For example, when the I/O #1 and the UE #1 are located in a same communication apparatus, a communication apparatus #1 includes the UE #1 and the I/O #1. Similarly, the I/O #2 and the UE #2 may be located in a same communication apparatus or in different communication apparatuses. For example, when the I/O #2 and the UE #2 are located in a same communication apparatus, a communication apparatus #2 includes the UE #2 and the I/O #2.

As shown in FIG. 7A and FIG. 7B, the method includes the following steps.

701: The I/O #2 sends data #1 to a PLC via the UE #2.

It should be understood that, after the I/O #2 attempts to establish a connection to the PLC, and completes establishment and matching of a communication relationship and an application relationship, the I/O #2 periodically generates a real-time data packet, and sends the data packet to the PLC through a 3GPP network. For example, the real-time data packet generated by the I/O #2 is the data #1, and the I/O #2 sends the data #1 to the PLC via the UE #2.

Specifically, the I/O #2 sends the data #1 to the UE #2, and after receiving the data #1, the UE #2 sends the data #1 to the PLC.

702: The UE #2 determines information #A.

Specifically, after the UE #2 receives the data #1 from the I/O #2, when the UE #2 detects that a time interval between a moment T1 at which the I/O #2 sends the data #1 and an air interface scheduling moment T2 of the UE #2 is greater than or equal to a threshold (for example, a first threshold), the UE #2 determines the information #A. The information #A includes a first value, and the first value is the time interval between T1 and T2.

It should be understood that the I/O #2 sends the data #1 to the UE #2 at the moment T1. After receiving the data #1, the UE #2 further needs to wait until the moment T2 to send the data #1 to the PLC. When the time interval between T1 and T2 is greater than or equal to the first threshold, the UE #2 determines the information #A, and sends the information #A to a RAN.

In a possible implementation, the UE #2 may directly send T1 to the RAN, and does not need to determine whether the time interval between T1 and T2 is greater than or equal to the first threshold. After the RAN receives the moment T1 from the UE #2, the RAN determines whether the time interval between T1 and T2 is greater than or equal to the first threshold. When the time interval between T1 and T2 is greater than or equal to the first threshold, the RAN determines the information #A.

The first threshold may be predefined by a system, or indicated by a system based on a real-time status of a network by using indication information, or determined by the communication apparatus. This is not specifically limited in this application.

703: The UE #2 sends the information #A to an IFES through the 3GPP network.

Specifically, when the UE #2 determines that a time interval between the service packet transmission moment T1 and the air interface scheduling moment T2 of the communication apparatus #2 is greater than or equal to the first threshold, the UE #2 sends the information #A to the RAN. After receiving the information #A, the RAN sends the information #A to a 5GC, and the 5GC further sends the information #A to the IFES.

704: The IFES determines information #C based on the information #A and information #B.

Specifically, after the IFES receives the information #A from the UE #2, the IFES further determines the information #C based on the information #A and the information #B. The information #C indicates the RAN to adjust the air interface scheduling moment of the UE #2 based on a first moment, where the first moment is a service packet transmission moment corresponding to the I/O #1.

It should be understood that the information #B is used to determine whether the service packet transmission moment of the I/O #2 is capable of being scheduled by a wireless communication system.

In a possible implementation, through a periodic service announcement procedure, the IFES obtains the information #B and determines that the I/O #2 is the type-B industrial terminal device. Alternatively, in an active sensing mode, the IFES obtains the information #B and further determines that the I/O #2 is the type-B industrial terminal device.

The information #B may include one or more of the following: an apparatus type, an apparatus model, manufacturer information, apparatus attribute information, and the like.

In an example, the IFES obtains type information, manufacturer information, signal information, and the like of the I/O #2 in an active sensing mode, further determines that the I/O #2 is the type-B industrial terminal device, and determines that the service packet transmission moment of the I/O #2 is incapable of being scheduled by the wireless communication system.

It should be understood that the IFES may determine that the I/O #2 is an unorchestratable apparatus before step 704 shown in FIG. 7A; or may further obtain the information #B after the IFES receives the information #A from the UE #2, and determine that the I/O #2 is an unorchestratable apparatus. This is not specifically limited in this application.

705: The IFES sends the information #C to the RAN through the 5GC.

Specifically, after the IFES determines that the communication apparatus corresponding to the I/O #2 is a type-B industrial communication apparatus, the IFES sends the information #C to the RAN through the 5GC. The information #C indicates the RAN to adjust the air interface scheduling moment of the UE #2 based on the first moment, where the first moment is the service packet transmission moment corresponding to the I/O #1.

It should be understood that the IFES determines, based on step 704, that the I/O #2 is the unorchestratable apparatus, that is, the service packet transmission moment of the I/O #2 is incapable of being adjusted by the wireless communication system. To reduce the time interval between the service packet transmission moment of the I/O #2 and the air interface scheduling moment of the UE #2, the IFES further adjusts the air interface scheduling moment of the UE #2, so that the time interval between the service packet transmission moment of the I/O #2 and the air interface scheduling moment of the UE #2 is approximately 0.

706: The RAN sends configuration information #1 to the UE #2.

Specifically, after receiving the information #C from the IFES through the 5GC, the RAN determines the configuration information #1 based on the first moment in the information #C, and sends the configuration information #1 to the UE #2.

It should be understood that the RAN further configures a corresponding air interface scheduling-free slot resource for a new air interface scheduling slot of the UE #2 based on an air interface scheduling slot (for example, the first moment) that is adjusted based on the information #C and that corresponds to the UE #2, and sends the resource to the UE #2.

When a quantity of devices occupying a wireless communication resource is greater than or equal to a second threshold at the first moment, in the method shown in FIG. 7A and FIG. 7B, the method may further include the following steps.

707: When the RAN determines that the wireless communication resource at the first moment is in a congested state, the RAN determines first indication information.

Specifically, when the IFES indicates the RAN to adjust the air interface scheduling moment corresponding to the UE #2 to the first moment, the RAN allocates a new scheduling-free resource corresponding to the first moment to the UE #2. When the RAN determines that the wireless resource at the first moment is in a congested state, the RAN further determines the first indication information. The first indication information indicates the IFES to adjust the service packet transmission moment corresponding to the I/O #1. Before the IFES adjusts the service packet transmission moment corresponding to the I/O #1, the service packet transmission moment of the I/O #1 is the first moment.

It should be understood that, when it is assumed that a quantity of devices occupying a same wireless resource is greater than or equal to a threshold at a moment, it is considered that the wireless communication resource at the moment is in a congested state. Alternatively, when a quantity of devices occupying a same wireless resource is less than a threshold at a moment, it is considered that the wireless communication resource at the moment is in a non-congested state.

In an example, when it is assumed that a quantity of devices on a wireless communication resource at a moment is greater than or equal to 20, it indicates that the wireless resource at the moment is in a congested state. For example, if a quantity of devices on the wireless communication resource in a slot A is 18, and 18 is less than 20, it indicates that the wireless communication resource in the slot A is in a non-congested state; or if a quantity of devices on the wireless communication resource in a slot B is 21, it indicates that the wireless communication resource in the slot B is in a congested state. If the first moment is the slot A, the RAN determines that the wireless communication resource is in a non-congested state, and step 707 and steps after step 707 do not need to be performed. If the first moment is the slot B, the RAN determines that the wireless communication resource is in a congested state, and the RAN needs to further perform step 707 to determine the first indication information.

The first indication information indicates the IFES to adjust a service air interface scheduling moment of a type-A industrial terminal device in the slot B to a slot #C, where the wireless communication resource corresponding to the slot C is in a non-congested state.

In another example, for example, a maximum quantity of devices occupying a wireless communication resource at a moment is 25. The RAN may further determine, based on a quantity of remaining devices that can occupy the wireless communication resource at the moment, whether the wireless communication resource is in a congested or non-congested state. When it is assumed that a quantity of remaining devices that can occupy the wireless communication resource at a moment is less than or equal to 5, it indicates that the wireless communication resource at the moment is in a congested state. When a quantity of remaining devices that can occupy the wireless communication resource at a moment is greater than 5, it indicates that the wireless communication resource at the moment is in a non-congested state.

It should be understood that at a moment, a status the wireless resource may be classified into a congested state and a non-congested state, or may be classified into a congested state, a normal state, an idle state, and the like. Details are not listed in this application.

708: The RAN sends the first indication information to the IFES through the 5GC.

Specifically, if the RAN determines that the wireless communication resource at the first moment is in a congested state, the RAN determines the first indication information, and sends the first indication information to the IFES over the 5GC.

The first indication information indicates the IFES to adjust a service packet transmission moment of an orchestratable apparatus (for example, the communication apparatus #1) at the first moment.

In a possible implementation, the first indication information includes a second moment and/or a first offset time. When the first indication information includes a second moment, the first indication information indicates the IFES to adjust the service packet transmission moment of the communication apparatus #1 from the first moment to the second moment. When the first indication information includes a first offset time, the IFES determines, based on the first offset time, to adjust the service packet transmission moment of the communication apparatus #1 from the first moment to the second moment. The first offset time is a relative offset time in a CT cycle time. For example, in a time synchronization mode, the 5GC and the IFES use a same base time (base time), and may use a relative slot in the cycle time. In a non-time synchronization mode, the 5GC notifies, through calculation, the IFES of a relative adjustment amount, namely, the first offset time, of the service packet transmission moment of the I/O #1 of the communication apparatus #1 in the CT cycle time.

In an example, it is assumed that in a TSN time synchronization scenario, an industrial terminal device or an external AF directly provides an absolute moment (burst arrive time, BAT) of packet sending, and transfers the absolute moment to the RAN through the 5GC. The RAN calculates a TimeOffset, namely, a first offset time, based on a time difference between the absolute moment and an air interface moment that is estimated to be allocated to a UE.

In another example, it is assumed that in a non-time synchronization scenario, a TimeOffset, namely, the first offset time, can be calculated based on a time interval between an actual packet transmission moment of an industrial terminal device and a resource allocation moment of an air interface.

The wireless communication resource at the second moment may be in a non-congested state.

It should be understood that the IFES receives the first indication information from the RAN through the 5GC, and determines second indication information based on the first indication information. In the method shown in FIG. 7A and FIG. 7B, the method may further include the following steps.

709: The IFES sends the second indication information to the I/O #1.

Specifically, after receiving the first indication information from the RAN, the IFES sends the second indication information to the I/O #1 based on the first indication information.

The second indication information indicates the I/O #2 to adjust the service packet transmission moment from the first moment to the second moment.

710: The RAN sends a scheduling-free resource configuration #1 to the UE #1.

Correspondingly, the UE #1 receives the scheduling-free resource configuration #1 from the RAN.

The scheduling-free resource configuration #1 and a scheduling-free resource configuration #2 both provide a scheduling-free service for the UE #1 in a first time period. The scheduling-free resource configuration #2 is a scheduling-free resource configuration corresponding to a case in which the air interface scheduling moment of the UE #1 is the first moment.

It should be understood that the UE #1 can transmit data by using both the scheduling-free resource configuration #1 and the scheduling-free resource configuration #2 in a period of time.

711: The RAN sends deactivation information to the UE #1.

Specifically, the RAN sends the deactivation information to the UE #1, where the deactivation information is used to deactivate the scheduling-free resource configuration #2 of the UE #1.

In a possible implementation, the RAN sends the deactivation information to the UE #1 at a pre-configured fixed time. Alternatively, after receiving a feedback result of the IFES, the RAN sends the deactivation information to the UE #1. The feedback result may indicate that the service packet transmission moment of the I/O #1 is adjusted from the first moment to the second moment.

According to the communication method shown in FIG. 7A and FIG. 7B, when there is an unorchestratable communication apparatus in a system, to avoid a transmission delay caused by a large time interval between a service packet transmission moment and an air interface scheduling moment of the communication apparatus, the air interface scheduling moment of the communication apparatus may be first scheduled, so that the time interval between the service packet transmission moment and the air interface scheduling moment of the communication apparatus is approximately 0. This reduces a transmission delay and improves communication performance. In addition, when a wireless communication resource corresponding to the service packet transmission moment of the communication apparatus is in a congested state, an orchestratable communication apparatus at the moment may be adjusted, to meet a service requirement of the unorchestratable communication apparatus. When the orchestratable communication apparatus at the moment is adjusted, a new scheduling-free configuration is configured for the orchestratable communication apparatus. After the new scheduling-free configuration and an old scheduling-free information of the orchestratable communication apparatus coexist for a period of time, an access network device deactivates the old scheduling-free configuration based on a pre-configured time or a scheduling feedback result. This ensures service continuity of the orchestratable communication apparatus and ensures communication quality.

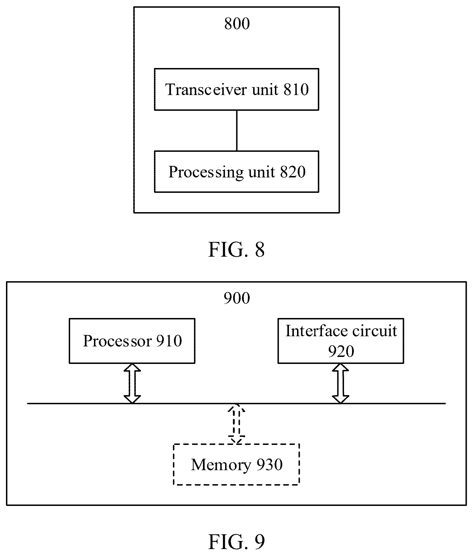

The method provided in this application is described in detail above with reference to FIG. 4 to FIG. 7A and FIG. 7B. Communication apparatus embodiments of this application are described in detail below with reference to FIG. 8 and FIG. 9. It may be understood that, to implement the functions in the foregoing embodiments, the communication apparatus in FIG. 8 or FIG. 9 includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on specific application scenarios and design constraints of the technical solutions.

FIG. 8 and FIG. 9 are diagrams of structures of possible apparatuses according to embodiments of this application. These apparatuses may be configured to implement the methods performed by the access network device, the first apparatus, and the communication apparatus in the foregoing method embodiments, and therefore can also implement beneficial effects of the foregoing method embodiments.

As shown in FIG. 8, an apparatus 800 includes a transceiver unit 810 and a processing unit 820.

FIG. 8 is a block diagram of a communication apparatus according to an embodiment of this application. The apparatus 800 includes the transceiver unit 810 and the processing unit 820. The transceiver unit 810 may be configured to implement a corresponding communication function. The transceiver unit 810 may also be referred to as a communication interface or a communication unit. The processing unit 820 may be configured to implement a corresponding processing function, for example, modifying an address.

Optionally, the apparatus 800 further includes a storage unit. The storage unit may be configured to store instructions and/or data. The processing unit 820 may read the instructions and/or the data in the storage unit, so that the apparatus implements actions of a device or a network element in the foregoing method embodiments.

Optionally, the apparatus 800 may further include the processing unit 820. The processing unit 820 may be configured to perform data processing.

Optionally, the apparatus 800 further includes a storage unit. The storage unit may be configured to store instructions and/or data. The processing unit 820 may read the instructions and/or the data in the storage unit, so that the apparatus implements actions of different devices in the foregoing method embodiments, for example, actions of the I/O #1, the UE #1, the access network device, or the first apparatus (for example, the IFES).

The apparatus 800 may be configured to perform actions performed by the I/O #1, the UE #1, the access network device, or the first apparatus in the foregoing method embodiments. In this case, the apparatus 800 may be the I/O #1, the UE #1, the access network device, or the first apparatus; or a component of the I/O #1, the UE #1, the access network device, or the first apparatus. The transceiver unit 810 is configured to perform operations related to receiving and sending of the I/O #1, the UE #1, the access network device, or the first apparatus in the foregoing method embodiments. The processing unit 820 is configured to perform processing-related operations of the I/O #1, the UE #1, the access network device, or the first apparatus in the foregoing method embodiments.

It should be further understood that the apparatus 800 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the I/O #1, the UE #1, the access network device, or the first apparatus in the foregoing embodiments, and may be configured to perform procedures and/or steps corresponding to the I/O #1, the UE #1, the access network device, or the first apparatus in the foregoing method embodiments. Alternatively, the apparatus 800 may be specifically the I/O #1, the UE #1, the access network device, or the first apparatus in the foregoing embodiments, and may be configured to perform procedures and/or steps corresponding to the I/O #1, the UE #1, the access network device, or the first apparatus in the foregoing method embodiments. To avoid repetition, details are not described herein again.

The apparatus 800 in the foregoing solutions has a function of implementing corresponding steps performed by the I/O #1, the UE #1, the access network device, or the first apparatus in the foregoing methods, or the apparatus 800 in the foregoing solutions has a function of implementing corresponding steps performed by the I/O #1, the UE #1, the access network device, or the first apparatus in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 810 may alternatively be a transceiver circuit (for example, may include a receiving circuit and a sending circuit), and the processing unit may be a processing circuit.

It should be noted that the apparatus in FIG. 8 may be the first apparatus (for example, the IFES) or the access network device in the foregoing embodiment, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 9 is a block diagram of another communication apparatus according to an embodiment of this application. The apparatus 900 includes a processor 910. The processor 910 is configured to execute a computer program or instructions stored in a memory 920, or read data/signaling stored in the memory 920, to perform the methods in the foregoing method embodiments. Optionally, there are one or more processors 910.

Optionally, as shown in FIG. 9, the apparatus 700 further includes the memory 920. The memory 920 is configured to store the computer program or the instructions and/or the data. The memory 920 and the processor 910 may be integrated, or may be disposed separately. Optionally, there are one or more memories 920.

Optionally, as shown in FIG. 9, the apparatus 700 further includes a transceiver 930. The transceiver 930 is configured to receive and/or send a signal. For example, the processor 910 is configured to control the transceiver 930 to receive and/or send a signal.

In a solution, the apparatus 900 is configured to implement operations performed by the I/O #1, the UE #1, the access network device, or the first apparatus in the foregoing method embodiments.

For example, the processor 910 is configured to execute the computer program or the instructions stored in the memory 920, to implement related operations in the foregoing method embodiments, for example, the method of the access network device in the embodiment shown in FIG. 7A and FIG. 7B.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described in this specification is intended to include, but is not limited to, these and any other appropriate type of memory.

An embodiment of this application further provides a computer-readable storage medium. The computer-readable storage medium stores computer instructions for implementing the method performed by the I/O #1, the UE #1, the access network device, or the first apparatus in the foregoing method embodiments.

For example, when the computer program is executed by a computer, the computer is caused to implement the method performed by a first node and/or a second node in the foregoing method embodiments.

An embodiment of this application further provides a computer program product, including instructions. When the instructions are executed by a computer, the method performed by the I/O #1, the UE #1, the access network device, or the first apparatus in the foregoing method embodiments is implemented.

An embodiment of this application further provides a communication system, including the I/O #1, the UE #1, the access network device, or the first apparatus.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division of the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In addition, functional units in embodiments of this application may be integrated into one processing unit, each of the units may exist alone physically, or two or more units may be integrated into one unit.

The term "and/or" in this application is merely an association relationship for describing associated objects, and indicates that three relationships may exist. For example, A and/or B may indicate the following three cases: Only A exists, both A and B exist, and only B exists. A, B, and C each may be singular or plural. This is not limited. "A plurality of' in this application means two or more than two.

In embodiments of this application, numbers such as "first" and "second" are used to distinguish between same items or similar items with basically same functions and purposes. A person skilled in the art can understand that "first" and "second" do not limit a quantity or a sequence, and "first", "second", and the like do not indicate a definite difference.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing description is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by an access network device, first information from a first apparatus through a core network, wherein the first information indicates the access network device to adjust a wireless air interface scheduling-free moment of a second apparatus based on a first moment, the first moment is a service packet transmission moment of the second apparatus, the second apparatus is an unorchestratable apparatus, and the unorchestratable apparatus is an apparatus whose service packet transmission moment is incapable of being orchestrated by a wireless communication system; and
sending, by the access network device, first configuration information to the second apparatus based on the first information, wherein the first configuration information comprises an air interface scheduling-free slot resource allocated by the access network device to the second apparatus.

2. The method according to claim 1, wherein when a quantity of devices occupying a wireless communication resource is greater than or equal to a first threshold at the first moment,
the method further comprises:
sending, by the access network device, first indication information to the first apparatus through the core network, wherein the first indication information indicates the first apparatus to adjust a service packet transmission moment of a third apparatus, the first indication information comprises a second moment and/or a first offset time, the second moment is an adjusted service packet transmission moment of the third apparatus, the third apparatus is an orchestratable apparatus, the orchestratable apparatus is an apparatus whose service packet transmission moment is capable of being adjusted by the wireless communication system, and the service packet transmission moment, before adjustment, of the third apparatus is the first moment.

3. The method according to claim 1 or 2, wherein before receiving, by the access network device, the first information through the core network, the method further comprises:
receiving, by the access network device, second information from the second apparatus, wherein the second information comprises a first value, the first value is a time difference before the first moment and a third moment, the third moment is the wireless air interface scheduling-free moment of the second apparatus, and the first value is greater than or equal to a second threshold; and
sending, by the access network device, the second information to the first apparatus through the core network.

4. The method according to claim 2 or 3, wherein the method further comprises:
sending, by the access network device, second configuration information to the third apparatus, wherein the second configuration information comprises configuration information of a first scheduling-free resource, and the first scheduling-free resource and a second scheduling-free resource provide services for the third apparatus in a first time period; and
the second scheduling-free resource is a scheduling-free resource that provides a service for the third apparatus before the access network device sends the second configuration information to the third apparatus.

5. The method according to claim 4, wherein the method further comprises:
sending, by the access network device, deactivation information to the third apparatus, wherein the deactivation information is used to deactivate the second scheduling-free resource of the third apparatus.

6. A communication method, comprising:
receiving, by a communication apparatus, configuration information of an access network device, wherein the configuration information comprises configuration information of a first scheduling-free resource; and
receiving, by the communication apparatus, indication information of a first apparatus, wherein the indication information indicates the communication apparatus to adjust a service packet transmission moment from a first moment to a second moment, a scheduling-free resource corresponding to the first moment is a second scheduling-free resource, and a scheduling-free resource corresponding to the second moment is a first scheduling-free resource; and
the first scheduling-free resource and the second scheduling-free resource provide services for the communication apparatus in a first time period.

7. The method according to claim 6, wherein the method further comprises:
receiving, by the communication apparatus, deactivation information of the access network device, wherein the deactivation information indicates the communication apparatus to deactivate the second scheduling-free resource.

8. The method according to claim 6 or 7, wherein the communication apparatus comprises a second apparatus and a third apparatus;
receiving, by the communication apparatus, the configuration information of the access network device comprises:
receiving, by the second apparatus, the configuration information of the access network device; and
receiving, by the communication apparatus, the indication information of the first apparatus comprises:
receiving, by the third apparatus, the indication information of the first apparatus.

9. The method according to claim 8, wherein
receiving, by the communication apparatus, the deactivation information of the access network device comprises:
receiving, by the second apparatus, the deactivation information of the access network device.

10. A communication method, comprising:
sending, by a first apparatus, first information to an access network device through a core network, wherein the first information indicates the access network device to adjust a wireless air interface scheduling-free moment of a second apparatus based on a first moment, and the first moment is a service packet transmission moment of the second apparatus;
receiving, by the access network device through the core network, the first information sent by the first apparatus; and
sending, by the access network device, first configuration information to the second apparatus based on the first information, wherein the first configuration information comprises an air interface scheduling-free slot resource allocated by the access network device to the second apparatus.

11. The method according to claim 10, wherein when a quantity of devices occupying a wireless communication resource is greater than or equal to a first threshold at the first moment,
the method further comprises:
sending, by the access network device, first indication information to the first apparatus through the core network, wherein the first indication information indicates the first apparatus to adjust a service packet transmission moment of a third apparatus, the first indication information comprises a second moment and/or a first offset time, the second moment is an adjusted service packet transmission moment of the third apparatus, the third apparatus is an orchestratable apparatus, the orchestratable apparatus is an apparatus whose service packet transmission moment is capable of being adjusted by a wireless communication system, and the service packet transmission moment, before adjustment, of the third apparatus is the first moment.

12. The method according to claim 10 or 11, wherein before sending, by the first apparatus, the first information to the access network device through the core network, the method further comprises:
receiving, by the access network device, second information from the second apparatus, wherein the second information comprises a first value, the first value is a time difference before the first moment and a third moment, the third moment is the wireless air interface scheduling-free moment of the second apparatus, and the first value is greater than or equal to a second threshold; and
sending, by the access network device, the second information to the first apparatus through the core network.

13. The method according to claim 12, wherein the method comprises:
receiving, by the first apparatus through the core network, the second information sent by the access network device; and
sending, by the first apparatus, the first information to the access network device through the core network comprises:
sending, by the first apparatus, the first information to the access network device based on the second information and third information through the core network, wherein the third information is used to determine that the second apparatus is an unorchestratable apparatus, and the unorchestratable apparatus is an apparatus whose service packet transmission moment is incapable of being adjusted by the wireless communication system.

14. The method according to claim 13, wherein the third information comprises one or more of the following:
an apparatus type, an apparatus model, manufacturer information, and apparatus attribute information.

15. The method according to any one of claims 11 to 14, wherein the method further comprises:
receiving, by the first apparatus through the core network, the first indication information sent by the access network device; and
sending, by the first apparatus, second indication information to the third apparatus based on the first indication information, wherein the second indication information indicates the third apparatus to adjust the service packet transmission moment from the first moment to the second moment.

16. The method according to any one of claims 10 to 15, wherein the method further comprises:
sending, by the access network device, second configuration information to the third apparatus, wherein the second configuration information comprises configuration information of a first scheduling-free resource, and the first scheduling-free resource and a second scheduling-free resource provide services for the third apparatus in a first time period; and
the second scheduling-free resource is a scheduling-free resource that provides a service for the third apparatus before the access network device sends the second configuration information to the third apparatus.

17. The method according to claim 16, wherein a scheduling-free resource corresponding to the first moment is the second scheduling-free resource, and a scheduling-free resource corresponding to the second moment is the first scheduling-free resource.

18. The method according to claim 16 or 17, wherein the method further comprises:
sending, by the access network device, deactivation information to the third apparatus, wherein the deactivation information is used to deactivate the second scheduling-free resource of the third apparatus.

19. A communication apparatus, comprising a processor, wherein the processor is configured to execute a computer program or instructions stored in a memory, so that the apparatus is caused to perform the method according to any one of claims 1 to 5, the apparatus is caused to perform the method according to any one of claims 6 to 9, or the apparatus is caused to perform the method according to any one of claims 10 to 18.

20. The apparatus according to claim 19, wherein the apparatus further comprises the memory and/or a communication interface, and the communication interface is coupled to the processor; and
the communication interface is configured to input and/or output information.

21. A computer-readable storage medium, wherein the computer-readable storage medium stores a computer program or instructions; and when the computer program or the instructions are run on a communication apparatus, the communication apparatus is caused to perform the method according to any one of claims 1 to 5, the communication apparatus is caused to perform the method according to any one of claims 6 to 9, or the communication apparatus is caused to perform the method according to any one of claims 10 to 18.

22. A computer program product, wherein the computer program product comprises a computer program or instructions for performing the method according to any one of claims 1 to 5, comprises a computer program or instructions for performing the method according to any one of claims 6 to 9, or comprises a computer program or instructions for performing the method according to any one of claims 10 to 18.

23. A chip, wherein the chip is coupled to a memory, and is configured to read and execute program instructions stored in the memory, to implement the method according to any one of claims 1 to 5, implement the method according to any one of claims 6 to 9, or implement the method according to any one of claims 10 to 18.

24. A communication system, comprising an apparatus configured to perform the method according to any one of claims 1 to 5, and an apparatus configured to perform the method according to any one of claims 6 to 9.
